# EUROPEAN PATENT APPLICATION

(11) **EP 4 760 199 A1**
(43) Date of publication of application: **17.06.2026**
(21) Application number: 25223122.0
(22) Date of filing: 12.12.2025
(51) Int. Cl.: G01B 11/00, G02B 5/124, G01S 7/48, G01S 17/88, G01S 17/933

(54) **SYSTEMS, DEVICES, AND METHODS FOR RETROREFLECTION**

(30) Priority: 13.12.2024 US 202463733806 P
(71) Applicant: MDA Space and Robotics Limited, Didcot Oxfordshire OX110RL (GB)
(72) Inventor: Jones, David Huw, Didcot, Oxfordshire, OX110RL (GB)
(74) Representative: Mewburn Ellis LLP

(57) **Abstract**

Provided is a retroreflector system comprising a first body and a second body. The second body includes a laser source that emits laser light. The first body includes an array of retroreflectors that receives the laser light to reflect reflected laser light in the same direction that the laser light is received. The retroreflectors in the array of retroreflectors have a unique identifier that makes the retroreflectors in the array of retroreflectors uniquely identifiable. The second body includes a sensor for receiving the reflected laser light.

## Description

### Technical Field

The following relates generally to retroreflectors, and more particularly to systems and methods for retroreflection.

### Introduction

A retroreflector (sometimes called a retroflector or cataphote) is a device or surface that reflects radiation (usually light) back to its source with minimum scattering. Corner cube retroreflectors use mirrors to reflect a light such as a laser beam back in the direction from which the light came. Corner cube retroreflectors may be used as part of optical metrology systems for the purpose of measuring precise distances.

A retroreflector includes a set of three mutually perpendicular reflective surfaces, placed to form the internal corner of a cube. The three corresponding normal vectors of the corner's sides form a basis (x, y, z) in which to represent the direction of an arbitrary incoming light ray, [a, b, c]. When the light ray reflects from the first side, say x, the ray's x-component, a, is reversed to -a, while the y- and z-components are unchanged. Therefore, as the ray reflects first from side x then side y and finally from side z the ray direction goes from [a, b, c] to [-a, b, c] to [-a, -b, c] to [-a, -b, -c] and it leaves the corner with all three components of its direction exactly reversed.

Corner cube retroreflectors may be used as part of optical metrology systems for the purpose of measuring precise distances. For long range measurements (such as ranging off of satellites from ground stations), large corner cube retroreflectors or an array of multiple smaller corner cube retroreflectors may be used to increase the area of reflectance, and thus the return strength of the light signal.

Corner cube retroreflectors can be used to perform both distance measurements and lateral offset measurements. However, the diameter of the corner cube retroreflector determines the maximum lateral offset that can be measured. Furthermore, the receive aperture diameter for the measurement system must be twice as big as the diameter of the corner cube retroreflectors. Thus corner cube retroreflector systems may become prohibitively large if the corner cube retroreflector system covers a large range of offset measurements.

Accordingly, there is a need for an improved system and method for retroreflection that overcomes at least some of the disadvantages of existing systems and methods.

### Summary

Provided is a system including a first body and a second body. The second body includes a laser source that emits laser light. The first body includes an array of retroreflectors that receives the laser light to reflect reflected laser light in the same direction that the laser light is received. The retroreflectors in the array of retroreflectors are uniquely identifiable. The second body includes a sensor for receiving the reflected laser light.

The retroreflector system may further include an image processor to process an image received by the sensor.

The image processor may process the reflected light image to determine which of the at least one retroreflectors in the array reflected the reflected laser light based on the unique identifier.

The retroreflectors may be corner cube retroflectors.

The unique identifier may make it possible to measure a large range of lateral offsets and/or provide an unambiguous lateral offset measurement.

The unique identifier may include an attenuation mask unique to each of the retroreflectors.

A first retroreflector in the array may have an attenuation mask with a first power. A second retroreflector may have an attenuation mask with a second power. The first power may be different from the second power.

The unique identifier may include a unique spacing between each of the retroreflectors in the array.

The unique identifier may include a different linear or circular polarization of each retroreflector in the array.

A first retroreflector and a second retroreflector may be spaced at a first distance. A third retroreflector and a fourth retroreflector may be spaced at a second distance. The first distance and the second distance may be unique as between each retroreflector.

Comparing the first and second distances may allow for the determination of which of the retroreflectors are reflecting the laser light.

The unique identifier includes an optical coating that is unique to each of the retroreflectors in the array.

The retroreflector system may be used in any one or more of the formation flying spacecraft, in-orbit structures including as space stations or solar farms, and optical metrology.

Provided is an array of retroreflectors. The array includes a plurality of retroreflectors have a unique identifier that makes the retroreflectors in the array of retroreflectors uniquely identifiable. The array of retroreflectors receives laser light to reflect reflected laser light in a same direction that the laser light is received.

Provided is a retroreflector system comprising a laser source that emits laser light. An array of retroreflectors receives the laser light to reflect reflected laser light in the same direction that the laser light is received. The retroreflectors in the array of retroreflectors have a unique identifier that makes the retroreflectors in the array of retroreflectors uniquely identifiable. A sensor for receiving the reflected laser light.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a system for retroreflection, in accordance with an embodiment;
Figures 2A and 2B are block diagrams of conventional corner cube retroreflectors;
Figures 3A, 3B, and 3C are block diagrams of conventional retroreflector systems used to measure the lateral offset of the laser beam from the center of the retroreflector;
Figure 4 is a block diagram of a system for retroreflection, in accordance with an embodiment;
Figures 5A and 5B are block diagrams of a system for retroreflection, in accordance with an embodiment; and
Figures 6A and 6B are block diagrams of a system for retroreflection, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

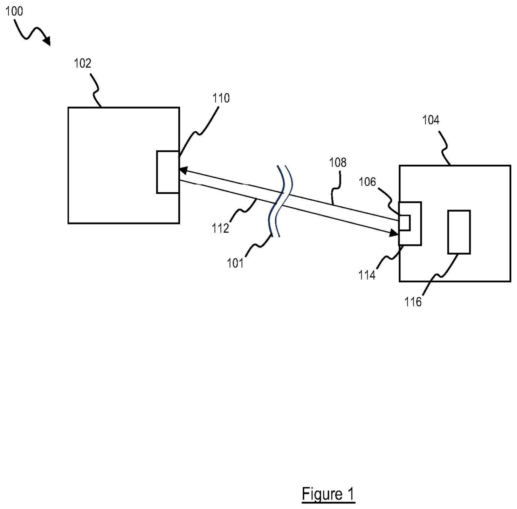

Referring to Figure 1, described therein is a system 100 for retroreflection, in accordance with an embodiment. The system 100 includes a first body 102, such as a satellite. The system includes a second body 104, such as a satellite or ground station.

The second body 104 includes a laser emitter 106 (shown schematically) that emits laser light 108.

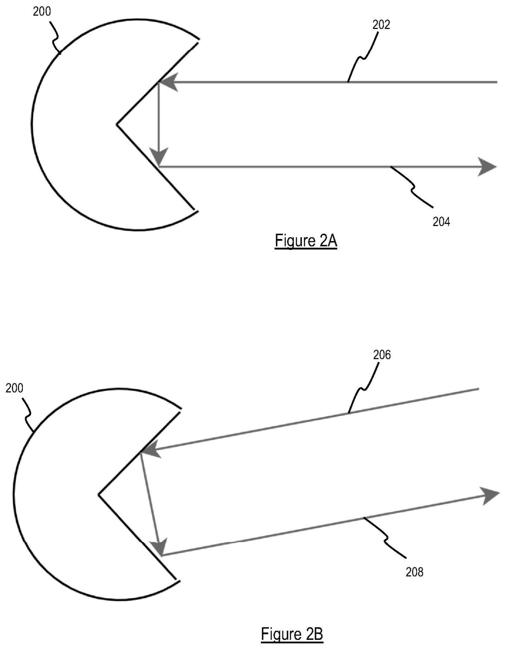

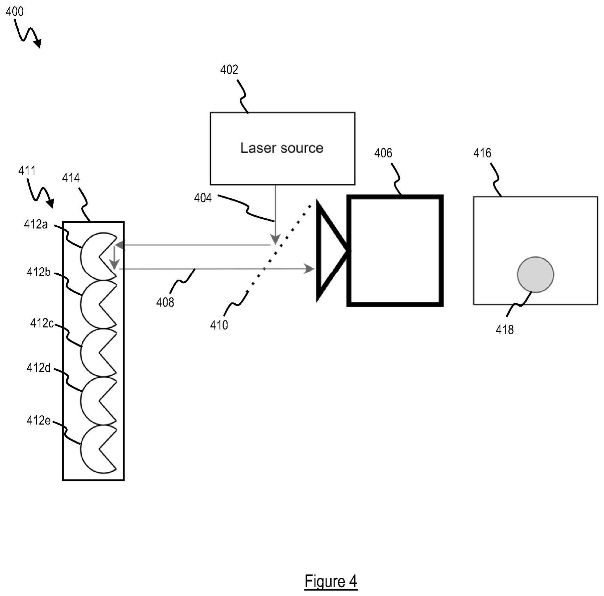

The first body 102 includes a retroreflector 110 that receives the laser light 108 to reflect reflected laser light 112 in the same direction that the laser light 108 is received. The retroreflector 110 may include a corner cube retroreflector such as those described herein (Figures 2A to 3C). The retroreflector 110 may include an array of retroreflectors such as those described herein (Figures 4 to 6B). Each retroreflector in the array of retroreflectors is uniquely identifiable. The retroreflectors in the array of retroreflectors have a unique identifier that makes the retroreflectors in the array of retroreflectors uniquely identifiable.

The second body 104 includes a sensor 114 (shown schematically) for receiving the reflected laser light 112. Figure 1 includes a line break 101 to represent that the first body 102 and the second body 104 are spaced far from each other relative to the angles of the laser light 108, 112. The laser emitter 106 may be combined with the received optics of the sensor 114. The sensor 114 may be a camera. Effectively the laser emitter 106 may be in the middle of the receive optics that is achieved via a set of optical elements.

The second body 104 (or another device in communication with the second body) includes an image processor 116 to process the image received by the sensor 114. The image processor 116 may be part of or include a computer system.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a field programmable gate array (FPGAs) processor or a dedicated application-specific integrated circuit (ASIC).

Each program may be implemented in a high-level procedural or object-oriented programming and/or scripting language to communicate with a computer system. However, the programs can be implemented in assembly or machine language, if desired. In any case, the language may be a compiled or interpreted language. Each such computer program may be stored on a storage media or a device readable by a general or special purpose programmable computer for configuring and operating the computer when the storage media or device is read by the computer to perform the procedures described herein.

The system 100 may be used in the formation flying spacecraft. The system 100 may be used on large in-orbit structures such as space stations or solar farms.

The system 100 may be used in optical metrology. The system 100 may be used in applications that cover a wide area with narrow beam of laser light 108. For example, the system 100 may be used when ranging off of the moon where the second body 104 is located on a space ship or satellite, and the first body 102 is located on the moon.

The system 100 may be used for longitudinal and lateral offset measurements by laser trackers, The system 100 may be used in space missions to precisely measure the offset between two spacecraft (e.g., 102, 104), for example when they are spacecrafts are flying in formation. Advantageously, the system 100 overcomes the limitations of conventional systems where the corner cube retroreflector must be the same size as the maximum offset that is to be measured, and where the optical receiver must be twice the size.

Referring to Figures 2A and 2B, described therein is a conventional corner cube retroreflector 200. The retroreflector 200 reflects a received laser beam 202 back via a reflected laser beam 204 in the same direction from which the laser beam 202 came from. As compared with Figure 2A, Figure 2B illustrates that a laser beam 206 having a different angle, which has the corner cube retroreflector 200 reflect reflected light 208 in the same angle.

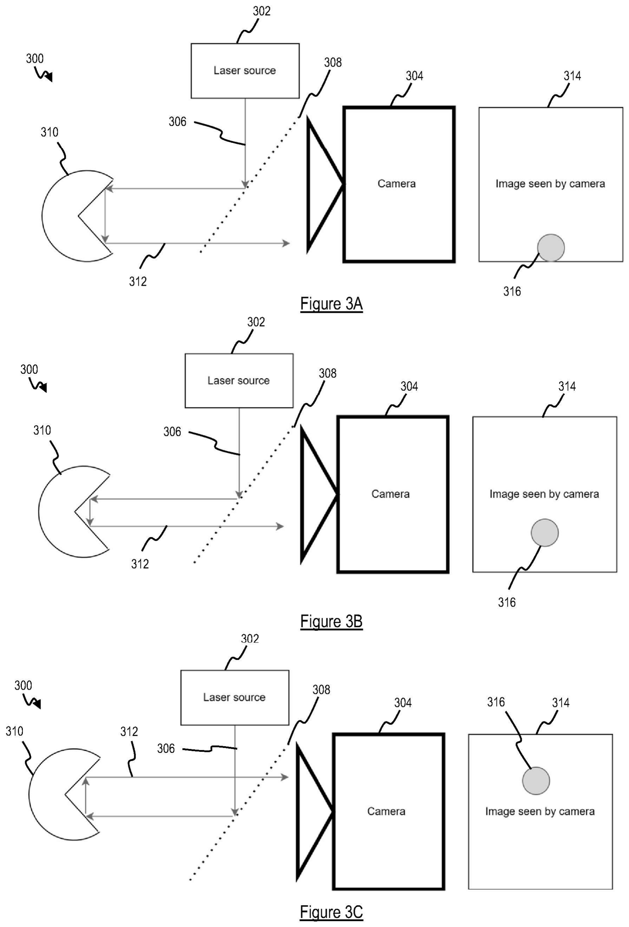

Referring to Figures 3A, 3B, and 3C, described therein is a conventional retroreflector lateral offset measurement system 300, with a laser source 302 in three different positions (Figure 3A relative to a sensor 304). The system 300 includes the laser source 302 that emits laser light 306. The laser light 306 is reflected off of a mirror 308 and onto a corner cube retroreflector 310. The retroreflector 310 reflects reflected laser light 312 back in the same direction to the sensor 304 (e.g., camera). The sensor 304 captures an image 314 including the reflected light image 316.

The laser source 302 and the sensor 304 move with respect to the corner cube retroreflector 310, from a first position (Figure 3A) to a second position (Figure 3B) to a third position (Figure 3C). As the laser source 302 and the sensor 304 move relative to the corner cube retroreflector 310 the reflected light image 316 on the image 314 moves accordingly.

Referring to Figure 4, described therein is a system 400 for retroreflection, in accordance with an embodiment. The system 400 includes a laser source 402 that emits laser light 404. The system 400 includes a sensor 406 (e.g., camera) that receives reflected laser light 408. The system 400 may include a mirror 410 that changes the direction of the laser light 406 to be emitted close to the central axis of image capture of the sensor 406.

The system 400 includes an array 411 of retroreflectors 412a, 412b, 412c, 412d, 412e that retroreflect the laser light 404. The retroreflectors 412a, 412b, 412c, 412d, 412e may be corner cube retroflectors (e.g., corner cube retroreflector 200). While five retroreflectors are shown, any relevant number of retroflectors 412a, 412b, 412c, 412d, 412e may be in the array 411. While the retroreflectors 412a, 412b, 412c, 412d, 412e are shown in one dimension, the retroreflectors 412a, 412b, 412c, 412d, 412e may be formed in two dimensions to create the array 411 with multiple rows and columns of retroreflectors 412a, 412b, 412c, 412d, 412e. The array 411 of retroreflectors 412a, 412b, 412c, 412d, 412e may form a flat panel.

The system 400 includes a unique identifier 414 that uniquely identifies each of the retroreflectors 412a, 412b, 412c, 412d, 412e in the array 411. The unique identifier 414 of makes it possible to measure a large range of lateral offsets from a much smaller system. The unique identifier 414 uniquely identifies which retroreflectors 412a, 412b, 412c, 412d, 412e in the array 411 is causing the reflection 408. The unique identifier 414 may provide an unambiguous lateral offset measurement.

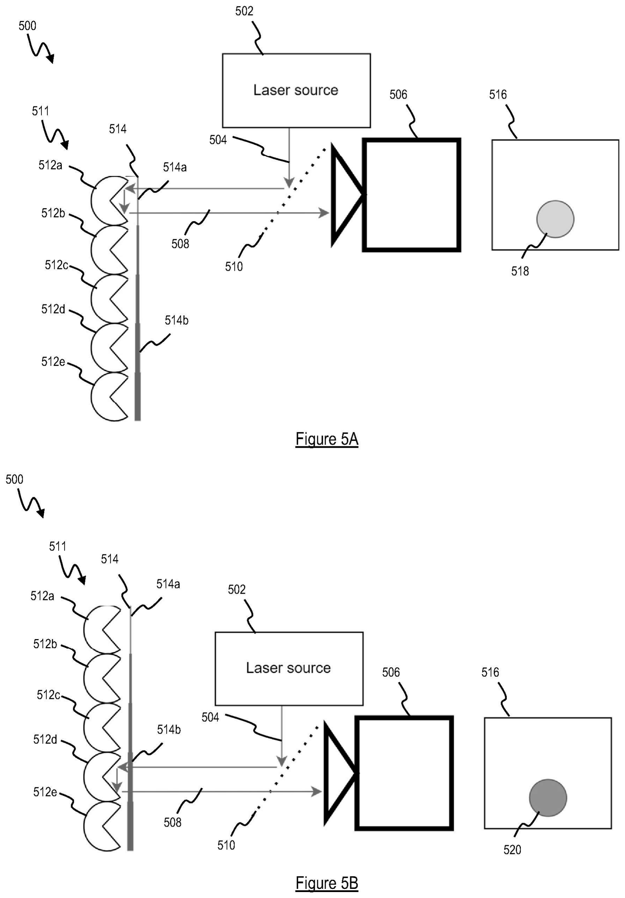

In an embodiment, the unique identifier 414 includes an attenuation mask unique to each of the retroreflectors 412a, 412b, 412c, 412d, 412e in the array 411. Each of the retroreflectors 412a, 412b, 412c, 412d, 412e in the array 411 is uniquely identifiable by the power of the reflected laser 408 achieved by the attenuation mask on the array 411 (see, e.g., Figures 5A and 5B).

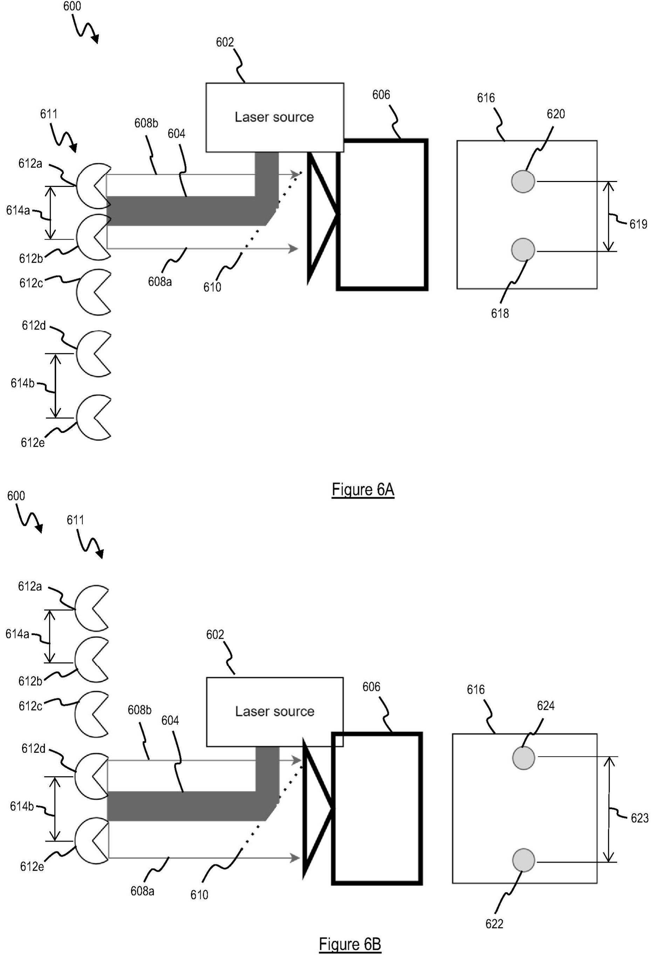

In an embodiment, the unique identifier 414 includes a unique spacing between each of the retroreflectors 412a, 412b, 412c, 412d, 412e in the array 411. Each of the retroreflectors 412a, 412b, 412c, 412d, 412e in the array 411 is uniquely identifiable by varying the distance between the retroreflectors 412a, 412b, 412c, 412d, 412e (see, e.g., Figures 6A and 6B).

In an embodiment, the unique identifier 414 includes an optical coating that is unique to each of the retroreflectors 412a, 412b, 412c, 412d, 412e in the array 411. Each of the retroreflectors 412a, 412b, 412c, 412d, 412e in the array is uniquely identifiable by the optical coating.

In an embodiment, the unique identifier 414 is a combination of any one or more of the attenuation mask, unique spacing between the retroreflectors, and optical coating that is unique to each of the retroreflectors.

The sensor 406 captures an image 416 including the reflected light image 418. An image processor (e.g., image processor 116) process the image. The image processor processes the reflected light image 418 to determine the particular retroreflector in the array 411 based on how the unique identifier 414 changes the reflected light 408.

The array 411 of retroreflectors 412a, 412b, 412c, 412d, 412e may be on a first body (e.g., first body 102). The laser source 402, sensor 406, and/or mirror 410 may be on a second body (e.g. second body 104).

Referring to Figures 5A and 5B, described therein is a system 500 for retroreflection, in accordance with an embodiment. The system 500 includes a laser source 502 that emits laser light 504. The system 500 includes a sensor 504 (e.g., camera) that receives reflected laser light 508. The system 500 may include a mirror 510 that changes the direction of the laser light 506 to be emitted close to an axis of image capture of the sensor 506. The system 500 includes an array 511 of retroreflectors 512a, 512b, 512c, 512d, 512e that retroreflect the laser light 504.

The system 500 includes a unique identifier 514 that uniquely identifies each of the retroreflectors 512a, 512b, 512c, 512d, 512e in the array 511. The unique identifier 514 includes an attenuation mask unique to each of the retroreflectors 512a, 512b, 512c, 512d, 512e in the array 511. Each of the retroreflectors 512a, 512b, 512c, 512d, 512e in the array 511 is uniquely identifiable by the power of the reflected laser 508 achieved by the attenuation mask on the array 511. Retroreflector 512a has an attenuation mask 514a with a first power. Retroreflector 512d has an attenuation mask 514b with a second power, where the first power is different from the second power.

In a variant, a different reflective coating is applied to each retroreflectors 512a, 512b, 512c, 512d, 512e. In a variant, the attenuation mask is applied directly to the reflective coatings.

The unique identifier may includes a polarization filter unique to each of the retroreflectors. The first retroreflector in the array may have a linear or circular polarization, which can be differentiated from a linear or circular polarization of the second retroreflector.

The sensor 506 captures an image 516 including the reflected light image 518. An image processor (e.g., image processor 116) process the image. The image processor processes the reflected light image 518 to determine the particular retroreflector in the array 511 based on how the unique identifier 514 changes the reflected light 508.

The attenuation mask is located in front of the array 511. Each retroreflectors 512a, 512b, 512c, 512d, 512e has a unique attenuation because of the different attenuation masks (e.g., 514a, 514b). The unique attenuation results in the power of the laser 508 that is received by the sensor 506 being reduced by a measurable amount. The image processor measures the received laser power to determine which retroreflector 512a, 512b, 512c, 512d, 512e caused the reflection, and thus where in the array 511 the measurement is being taken from.

Figures 5A and 5B show a difference in attenuation applied by the attenuation mask, resulting in different amplitude of spot detected between the image of reflected light image 518 of Figure 5A, and image of reflected light 520 of Figure 5B, based on attenuation mask 514a and 514b respectively. This difference in intensity between image 518 and 520 indicates a change in relative position of the laser light source 502 and sensor 506 relative to the array 511.

Referring to Figures 6A and 6B, described therein is a system 600 for retroreflection, in accordance with an embodiment. The system 600 includes a laser source 602 that emits laser light 604. The system 600 includes a sensor 604 (e.g., camera) that receives reflected laser light 608a, 608b. The system 600 may include a mirror 610 that changes the direction of the laser light 606 to be emitted close to an axis of image capture of the sensor 606. The system 600 includes an array 611 of retroreflectors 612a, 612b, 612c, 612d, 612e that retroreflect the laser light 604.

The system 600 includes a unique identifier that uniquely identifies each of the retroreflectors 612a, 612b, 612c, 612d, 612e in the array 611. The unique identifier includes unique spacing between each of the retroreflectors 612a, 612b, 612c, 612d, 612e in the array 611. Each of the retroreflectors 612a, 612b, 612c, 612d, 612e in the array 611 is uniquely identifiable by varying the distance between the retroreflectors 612a, 612b, 612c, 612d, 612e.

The sensor 606 captures an image 616 including the reflected light image 618. An image processor (e.g., image processor 116) process the image. The image processor processes the reflected light image 618, 620 to determine the particular retroreflector in the array 611 based on how the space between the retroreflectors changes the reflected light 608.

The beam of laser light 604 is not infinitely thin. For long range measurements, the beam may be deliberately widened. In Figure 6A, when the laser light 604 crosses from one retroreflectors 612a, to another retroreflector 612b, both retroreflectors 612a, 612b are illuminated, and two spots 618, 620 are detectable by the sensor 606.

Retroreflector 612a and 612b are spaced at distance 614a, and retroreflectors 612d and 612e are spaced at distance 614b, which is not the same (and in this case larger) as distance 514a. The distances 614a, 615b between each of the retroreflectors 612a, 612b, 612c, 612d, 612e is unique for each transition. Comparing Figure 6A to 6G, difference 619 in relative position of received image 618 and 620 as compared to difference 623 between image 622 and 624 allows for the image processor to determine which of the retroreflectors are reflecting the laser light.

While Figures 4, 5A, 5B, 6A, and 6B shown illustrate an offset measurement in one dimension, these may be applied in two dimensions to enable unique identification of the retroflectors within a 2D array of retroflectors.

While the above description provides examples of one or more apparatus, methods, or systems, it will be appreciated that other apparatus, methods, or systems may be within the scope of the claims as interpreted by one of skill in the art.

## Claims

1. A system comprising:
a first body and a second body;
wherein the second body includes a laser source that emits laser light;
wherein the first body includes an array of retroreflectors that receives the laser light to reflect reflected laser light in the same direction that the laser light is received;
wherein the retroreflectors in the array of retroreflectors have a unique identifier that makes the retroreflectors in the array of retroreflectors uniquely identifiable; and
wherein the second body includes a sensor for receiving the reflected laser light, and wherein the second body includes an image processor to process an image received by the sensor.

2. The system of claim 1, wherein the image processor processes the reflected light image to determine which of the at least one retroreflectors in the array reflected the reflected laser light based on the unique identifier.

3. The system of claim 1, wherein the second body includes a mirror that changes direction of the laser light to be emitted closer to an axis of image capture of the sensor.

4. The system of claim 1, wherein the retroreflectors are corner cube retroflectors.

5. The system of claim 1, wherein the unique identifier makes it possible to measure a large range of lateral offsets and/or provide an unambiguous lateral offset measurement.

6. The system of claim 1, wherein the unique identifier includes an attenuation mask or a polarization filter unique to each of the retroreflectors; and/or
wherein a first retroreflector in the array has an attenuation mask with a first power, and wherein a second retroreflector has an attenuation mask with a second power, and wherein the first power is different from the second power; and/or
wherein a first retroreflector in the array has a linear or circular polarization, which can be differentiated from a linear or circular polarization of a second retroreflector.

7. The system of claim 1, wherein the unique identifier includes a unique spacing between each of the retroreflectors in the array; and wherein comparing the first and second distances allows for the determination of which of the retroreflectors are reflecting the laser light; and/or
wherein a first retroreflector and a second retroreflector are spaced at a first distance, and wherein a third retroreflector and a fourth retroreflector are spaced at a second distance, wherein the first distance and the second distance are unique as between each retroreflector.

8. The system of claim 1, wherein the unique identifier includes an optical coating that is unique to each of the retroreflectors in the array.

9. The system of claim 1 used in any one or more of formation flying spacecraft, in-orbit structures including space stations or solar farms, and optical metrology.

10. An array of retroreflectors, the array comprising:
a plurality of retroreflectors have a unique identifier that makes the retroreflectors in the array of retroreflectors uniquely identifiable; and
wherein the array of retroreflectors receives laser light to reflect reflected laser light in a same direction that the laser light is received.

11. The array of uniquely identifiable retroreflectors of claim 10, wherein the retroreflectors are corner cube retroflectors.

12. The array of uniquely identifiable retroreflectors of claim 10, wherein a first retroreflector in the array has an attenuation mask with a first power, and wherein a second retroreflector has an attenuation mask with a second power, and wherein the first power is different from the second power.

13. The array of uniquely identifiable retroreflectors of claim 10, wherein a first retroreflector and a second retroreflector are spaced at a first distance, and wherein a third retroreflector and a fourth retroreflector are spaced at a second distance, wherein the first distance and the second distance are unique as between each retroreflector.

14. The array of uniquely identifiable retroreflectors of claim 13, wherein comparing the first and second distances allows for the determination of which of the retroreflectors are reflecting the laser light.

15. The array of uniquely identifiable retroreflectors of claim 13 further comprising an optical coating that is unique to each of the retroreflectors in the array.
